# EUROPEAN PATENT SPECIFICATION

(11) **EP 0 590 801 B1**
(45) Date of publication and mention of the grant of the patent: **28.05.1997**
(21) Application number: 93306920.5
(22) Date of filing: 01.09.1993
(51) Int. Cl.: C08L 23/08, A63B 37/00

(54) **Golf ball and production thereof**
Golfball und ihre Herstellung
Balle de golf et sa fabrication

(30) Priority: 01.09.1992 JP 258947/92
(43) Date of publication of application: 06.04.1994
(73) Proprietor: SUMITOMO RUBBER INDUSTRIES, LTD., Hyogo-ken (JP)
(72) Inventor: Horiuchi, Kuniyasu, Nada-ku, Kobe-shi, Hyogo-ken (JP); Kato, Akira, Suma-ku, Kobe-shi, Hyogo-ken (JP)
(74) Representative: Allard, Susan Joyce

(56) References cited:
- EP-A- 0 031 709

## Description

The present invention relates to a golf ball with a preferred shot feel and controllability and a satisfactory level of flight performance and cut resistance, and a method of producing such a golf ball.

In recent years, ionomer resins have frequently been used as the cover resin for golf balls (e.g. Japanese Kokai Publication Sho 49[1974]-49727). Especially in the case of a two-piece ball which employs a solid core, an ionomer resin is used as the cover resin in most cases, because the ionomer resin has an excellent durability, cut resistance and impact resilience and yet it is easy to process and is cheaper than other resins usable for the cover.

Also, it has recently been proposed to use a terpolymer of ethylene, methacrylic acid and an acrylate as a part of the cover material (e.g. Japanese Kokai Publication Hei 1[1989]-308577) or to use a mixture of a vulcanized natural rubber latex or synthetic rubber latex and an ionomer resin latex as the cover material (e.g. Japanese Kokai Publication Sho 57[1982]-188270), in order to improve the shot feel and controllability (ease of providing spin) of golf balls.

The golf ball which uses the terpolymer as a part of the cover material, however, has a very poor flight performance.

The golf ball employing the latex mixture as the cover material has a poor durability and cut resistance, because the cover material is obtained by mixing the ionomer resin latex after vulcanizing the rubber latex and therefore there is no mutual reaction between the rubber and the ionomer resin. Also, since the cover material contains the ionomer resin latex, molding of the cover is complicated requiring intensive labour which makes the process unprofitable.

Japanese Kokai Publication Sho 55[1980]-133440 proposes a process wherein a mixture of an ionomer resin and an ethylene-α-olefinic copolymer rubber is employed and the ethylene-α-olefinic copolymer rubber thereof is partially crosslinked with an organic peroxide. However, the organic peroxide crosslinks not only the copolymer rubber but also the ionomer resin and does not sufficiently improve the shot feel and controllability.

As aforesaid, various trials have been made to improve the shot feel and controllability of golf balls, but sufficient effect has not been obtained.

We have now developed a resin to be used for the cover of golf balls, which aims to improve the shot feel and controllability of the balls, and yet secures good flight performance and cut resistance.

Thus the present invention provides a golf ball comprising a core and a cover covering the core, wherein the cover is mainly made of a composition obtainable by mixing an ionomer resin with a diene type rubber in a weight ratio (ionomer resin:diene rubber) of 95:5 to 60:40 at a temperature of from 150°C to 270°C, the mixture containing a cross-linking agent which causes the diene type rubber to crosslink.

In the present invention, the diene type rubber is added and mixed into the ionomer resin and the diene type rubber alone is crosslinked. By introducing the resulting crosslinked diene type rubber into the ionomer resin, the ionomer resin is made flexible, the shot feel and controllability of the resulting golf ball are improved. In addition thereto, due to the reaction and entangling of the molecules of the ionomer resin, and the diene type rubber at their boundary, the durability and cut resistance of the ball are also improved.

Especially when crosslinking of the diene type rubber is conducted during mixing with ionomer resin, a more uniform mixing of the ionomer resin and crosslinked diene type rubber may be achieved and a golf ball with preferred characteristics is obtained.

In the present invention, in addition to the above, by specifying the amount of the diene type rubber to be mixed into the inomer resin, the deterioration of the impact resilience and cut resistance of the ionomer resin is minimized and a golf ball with a satisfactory flight performance and cut resistance is obtained.

The ionomer resin used in the present invention may be a copolymer of 10 to 20 wt% of an α,β-unsaturated carboxylic acid having 3 to 8 carbon atoms and 80 to 90 wt% of an α-olefin, of which a portion of the carboxylic groups is neutralized by a metal ion (e.g. sodium ion, lithium ion, zinc ion, or magnesium ion).

The diene type rubber to be mixed into the ionomer resin may be ethylene propylene diene rubber (EPDM), isoprene rubber (including natural rubber), butadiene rubber, styrene butadiene rubber, acrylonitrile butadiene rubber, or a mixture thereof.

The crosslinking agent to crosslink the diene type rubber may be one generally used for crosslinking diene type rubbers except peroxides, for example, a dimethylolphenol compound, a phenol formaldehyde resin, m-phenylenebismaleimide, a mixture of m-phenylenebismaleimide and dibenzothiazolsulfide (DM), sulfur, tetraethylthiuramdisulfide (TMTD), a mixture of sulfur and tetraethylthiuramdisulfide, a mixture of tetraethylthiuramdisulfide and zinc stearate (ZnSt), or a mixture thereof.

The amount of the crosslinking agent is preferably in the range of from 0.1 to 10 wt parts based on 100 wt parts of the diene type rubber. When the amount of crosslinking agent is less than 0.1 wt part based on 100 wt parts of diene type rubber, practically no crosslinking of the diene type rubber occurs and as a result, the flying distance of the ball is shorter, whereas if the amount of the crosslining agent is more than 10 wt parts based on 100 wt parts of the diene type rubber, the crosslinking of diene type rubber proceeds too much and the flowability of the mixture of the diene type rubber and the ionomer resin decreases remarkably and the processability of the mixture becomes inferior.

The weight ratio of the mixture of the ionomer resin and the diene type resin is required to be 95:5 to 60:40. When the amount of diene type rubber is below the above range, the flexibility of the product is insufficient and the improvement of shot feel and controllability of the ball is not obtained. When the amount of diene rubber is larger than the above range the cut resistance decreases remarkably and the flight performance also deteriorates and a golf ball with satisfactory physical characteristics is not obtained.

The cover material used in the present invention preferably has a stiffness of from 1,000 to 3,500 kgf/cm². When the stiffness of the cover material is larger than 3,500 kgf/cm², the ball is too hard and improvement of the shot feel and controllability of the ball is not obtained, whereas if the stiffness is less than 1,000 kgf/cm², the cut resistance is remarkably damaged, the flight performance deteriorates and a golf ball with satisfactory physical properties is not obtained.

In the present invention, the indispensable components of the covering material are the ionomer resin, the diene type rubber and the crosslinking agent and as necessary, various additives, for example, pigments, dispersants, UV ray absorbing agents, or optical stabilizers. As it is evident from the above description, the term "mainly composed of" means both that the cover material may be solely made from the ionomer mixture or that the cover material contains the ionomer mixture and the above mentioned additives.

The cover material is usually prepared by mixing the ionomer resin and the diene type rubber using an ordinary resin extruder or a closed mixer.

However, when they are mixed using an extruder, the ionomer resin and the diene type rubber may be sprinkled with a bridging agent before mixing, or the crosslinking agent may be added during extrusion by the extruder.

When they are mixed using a closed mixer, it is preferred to mix the ionomer resin and the diene type rubber first and then add the crosslinking agent, followed by mixing them again.

In either case, the temperature of the mixture is controlled at from 150 to 270°C, particularly at 180 to 250°C. When the temperature of the mixture is less than 150°C, uniform dispersion of the ionomer resin and diene type rubber is not achieved, durability decreases and satisfactory physical properties are difficult to obtain and furthermore, it takes time to crosslink the diene type rubber, thus making the process inefficient. When the temperature of the mixture is above 270°C, scorching occurs.

The cover material of the present invention may be used for the core of either a solid golf ball or a thread-wound golf ball.

In the case of a core for a solid golf ball, it may be used as the core of a two-piece golf ball or a multi-piece golf ball composed of more than three layers. For example, the core of the two-piece golf ball may be made by compounding 100 wt parts of polybutadiene with, for example, 10 to 60 wt parts of a crosslinking agent such as α,β-monoethylenic unsaturated carboxylic acid (e.g. acrylic acid or methacrylic acid etc.) or a metal salt thereof, a functional monomer (e.g. trimethylolpropane trimethacrylate), 10 to 30 wt parts of a filler, such as zinc oxide or barium sulfate, 0.5 to 5.0 wt parts of a peroxide, such as dicumyl peroxide, 0.1 to 1.0 wt part of an antioxidient to form a rubber composition which is then press-vulcanized, for example at a temperature of from 140 to 170°C for 10 to 40 minutes in a spherical mold.

The core of a thread-wound golf ball is composed of a center and a thread rubber layer wound around the center, the center being either of the liquid type or the rubber type. The rubber type center may be obtained by vulcanizing a rubber composition of the same type as that used for the aforesaid solid golf ball core.

The rubber thread may be a conventionally used one, for instance those obtained by vulcanizing the rubber composition comprising, for instance, natural rubber or natural rubber plus synthetic polyisoprene, antioxidant, vulcanization accelerator or sulfur. The aforesaid core for a solid golf ball or a thread-wound golf ball are simply examples and the present invention is not limited thereto.

The method of applying the cover on the core is not specifically restricted but may be any method conventionally practiced. For example the said specific cover material may be formed into a half-shell shape and the core wrapped with two such half shells, followed by pressure forming at 130 to 170°C for 1 to 5 minutes. The cover material may also be formed directly by injection molding.

The thickness of the cover is normally from 1.0 to 3.0 mm. When forming the cover, dimples are formed as required upon the surface of the ball or after forming of the cover, it may be finished by painting or it may be stamped as required.

### EXAMPLES

Hereunder are described the present invention more concretely by citing examples. However, the present invention is not limited to the examples.

### Examples 1 - 9 and comparative examples 1- 4

100 wt parts of cis-1,4-polybutadiene ( SR BR01 (tradename) manufactured by Japan Synthetic Rubber Co.) is mixed with 30 wt parts of zinc acrylate (manufactured by Nippon Shokubai Kagaku Kogyo Co.), 20 wt parts of zinc oxide (manufactured by Toho Zinc Co.) and 1 wt part of dicumyl peroxide (manufactured by Nippon Oils & Fats Co.) and the mixture was formed under pressure in a metal mold for the core at 150 °C for 30 minutes to obtain the core of 38.5 mm in diameter used for the solid golf ball.

Separately, the compounding materials shown in Table 1 -2 were mixed to prepare the cover material. In Tables 1 - 2 (especially in Table 1), the compounding materials are indicated in simplified form to fit into the limited space while additional descriptions are described hereunder after Table 2.

The amounts of compounding materials shown in Table 1 - 2 are by weight parts and Examples 1 - 9, Comparative Examples 1 - 4 set the amount of polymer components (ionomer resin and diene type rubber) at 100 wt parts. Although it is not shown in Tables 1 - 2, both for the Examples 1 - 9 and Comparative Examples 1 - 4, 2 wt parts of white pigment made of titanium oxide (TiO₂) is added to 100 wt parts of polymer components.

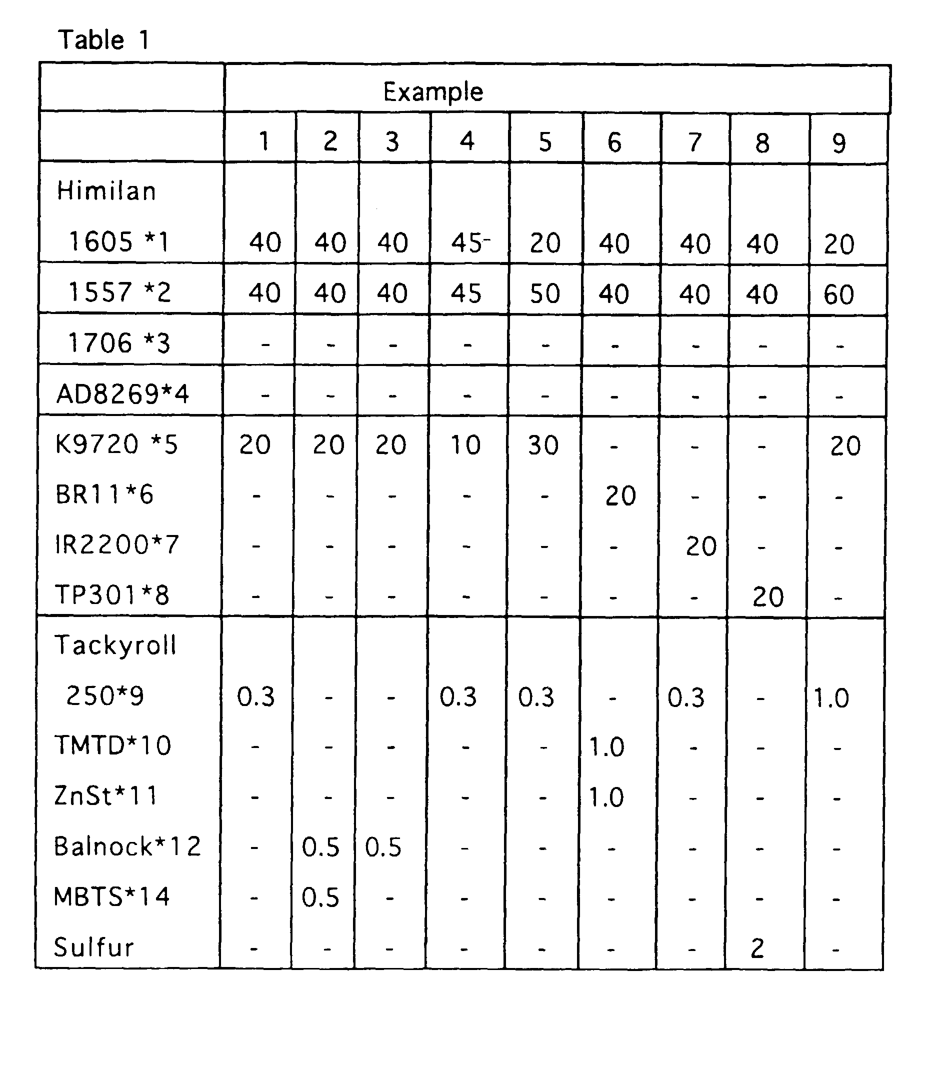

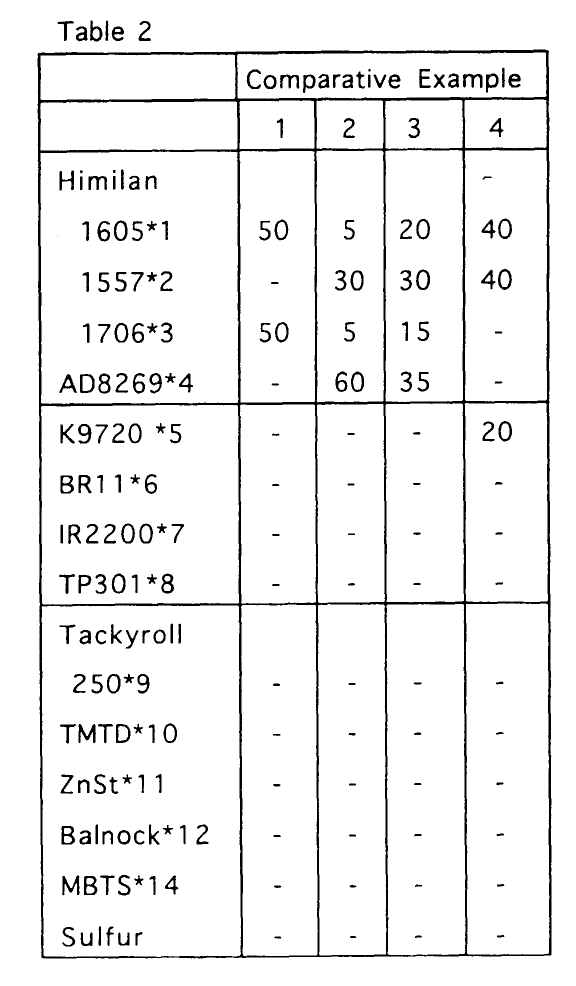

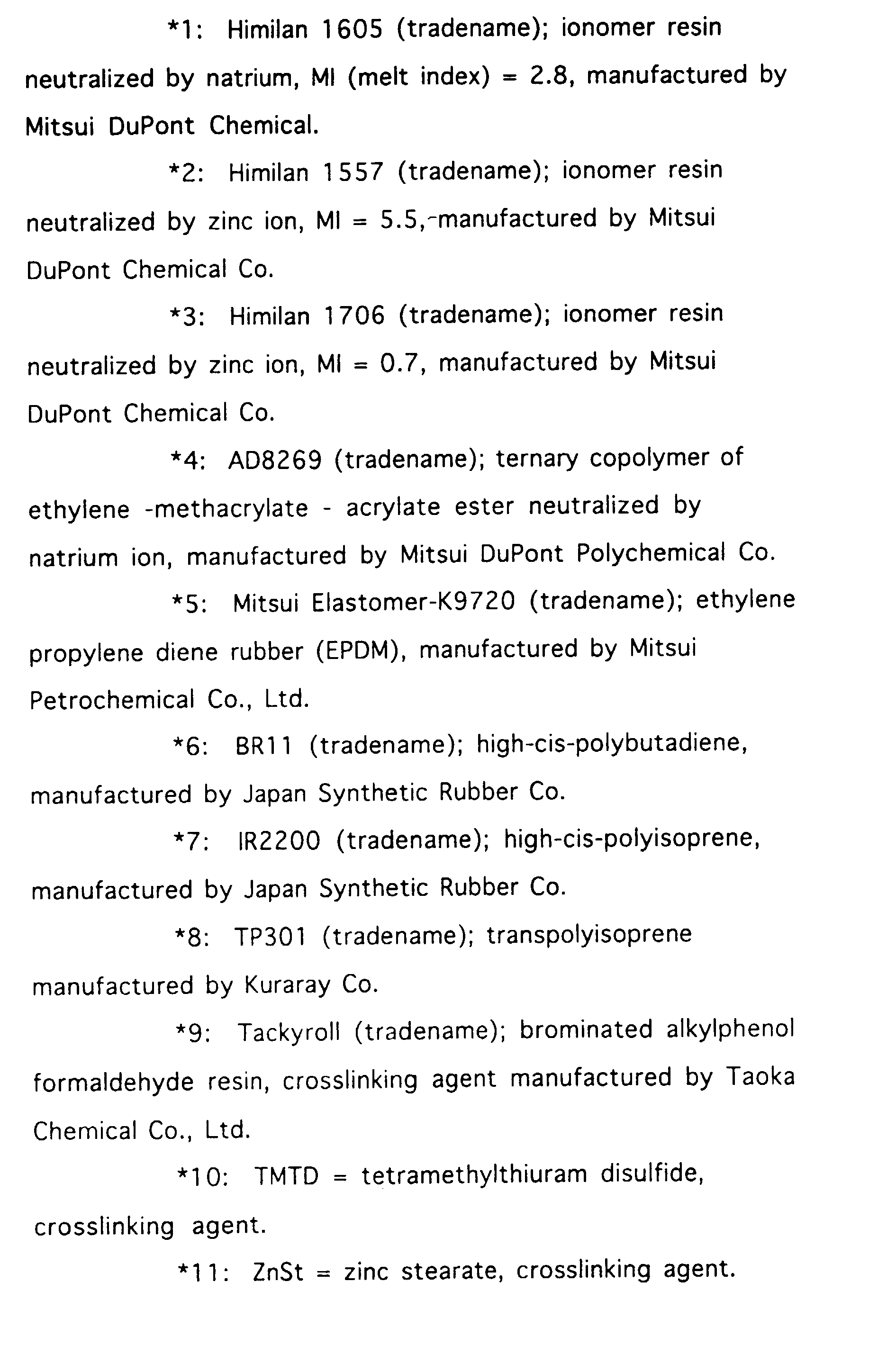

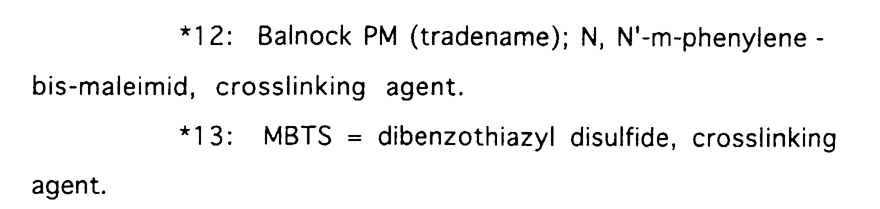

The cover material of Examples 1 - 9 was prepared in the manner as follows. The cover material of Examples 1 - 8 was prepared by mixing ionomer resin, diene type rubber, crosslinking agent, titanium oxide etc. by a blender and mixing them under heating by an ordinary extruder and pelletizing it.

The cover material of Example 9 was obtained by mixing ionomer resin, diene type resin and titanium oxide by a closed blender, adding crosslinking agent, mixing them three more minutes and pelletizing it by ordinary extruder.

Stiffness of the cover material of Example 1 was 2,100 kgf/cm², stiffness of the cover material of Example 2 was 2,050 kgf/cm², stiffness of the cover material of Example 3 was 2,000 kgf/cm², stiffness of the cover material of Example 4 was 2,600 kgf/cm², stiffness of the cover material of Example 5 was 1,500 kgf/cm², stiffness of the cover material of Example 6 was 1,950 kgf/cm², stiffness of the cover material of Example 7 was 1,900 kgf/cm², stiffness of the cover material of Example 8 was 2,000 kgf/cm² and stiffness of the cover material of Example 9 was 1,900 kgf/cm².

The cover materials of Comparative Examples 1 - 4 were mixed and pelletized by an extruder according to the ordinary method. Thus obtained cover material was directly covered on the core of solid golf ball by injection molding to obtain a two-piece solid golf ball and subsequently it was finished by painting. The diameter of thus obtained golf ball was 42.8 mm.

Weight, ball compression (PGA) initial flying speed and carry of thus obtained golf ball were measured. The results are shown in Table 3. The methods of measurement of the initial speed and carry were as follows:

### Initial speed

According to the R & A initial speed measuring method.

### Flight Distance

A golf ball was hit by No. 1 wood at the head speed of 45 m/sec., using a swing robot manufactured by Throughtemper Co. and the flight distance was also measured. Measurement was made on 10 balls for each kind of ball and the result was shown by their average value.

**Table 3**

| | Ball Weight | Ball compression (PGA) | Initial Velocity metres/sec (feet/sec) | Flight Distance -metres (yards) |
|---|---|---|---|---|
| Example 1 | 45.3 | 89 | 76.78(251.9) | 206.7(226) |
| Example 2 | 45.3 | 89 | 76.78(251.9) | 206.7(226) |
| Example 3 | 45.3 | 89 | 76.78(251.9) | 206.7(226) |
| Example 4 | 45.3 | 92 | 76.84(252.1) | 207.6(227) |
| Example 5 | 45.2 | 87 | 76.72(251.7) | 205.7(225) |
| Example 6 | 45.3 | 88 | 76.75(251.8) | 205.7(225) |
| Example 7 | 45.3 | 88 | 76.75(251.8) | 205.7(225) |
| Example 8 | 45.3 | 89 | 76.78(251.9) | 206.7(226) |
| Example 9 | 45.3 | 89 | 76.78(251.9) | 205.7(225) |
| Comparative Example 1 | 45.3 | 99 | 76.90(252.3) | 207.6(227) |
| Comp.Ex.2 | 45.3 | 87 | 75.04(249.5) | 201.2(220) |
| Comp.Ex.3 | 45.2 | 92 | 76.35(250.5) | 202.1(221) |
| Comp.Ex.4 | 45.3 | 89 | 76.29(250.3) | 202.1(221) |

As shown in Table 3, the flight distance of the golf balls of Examples 1-9 was 205.7 to 207.6 metres (225-227 yards) which was roughly equivalent to the flight distance of the golf ball of Comparative Example 1 which was the conventional ball and practically no decrease of flight distance due to mixing of diene type rubber into ionomer resin was noticed. Whereas, the golf balls of Comparative Examples 2-3 in which terpolymer of ethylene-methacrylate-acrylate ester was mixed into ionomer resin or the golf ball of Comparative Example 4 in which ethylene-propylene-diene rubber (EPDM) was mixed into ionomer resin indicated a flight distance of 201.2 to 202.1 metres (220-221 yards) which was 3.65 to 6.4 metres (4-7 yards) inferior to those of the golf balls of Examples 1-9 or Comparative Example 1. Next the shot feel and controllability of the golf balls of Examples 1-9 and Comparative Examples 1 - 4 were evaluated by actual hitting test by 10 professional golfers.

In the test, the thread-wound golf balls covered with the cover mainly made of transpolyisoprene (Barata) were used as the control and evaluation was made on how the golf balls of Examples 1 - 9 and Comparative Examples 1 - 4 compare to the thread-wound golf balls in regard to the shot feel and controllability. The results are shown in Table 5.

**Table 5**

| | Shot feel | Controllability |
|---|---|---|
| Example 1 | Equivalent to thread-wound golf ball | Equivalent to thread-wound golf ball |
| Example 2 | Ditto | Ditto |
| Example 3 | Ditto | Ditto |
| Example 4 | Ditto | Ditto |
| Example 5 | Ditto | Ditto |
| Example 6 | Ditto | Ditto |
| Example 7 | Ditto | Ditto |
| Example 8 | Ditto | Ditto |
| Example 9 | Ditto | Ditto |
| Comparative Ex 1 | Harder than thread-wound golf ball | More difficult to give spin and less controllable than thread-wound golf ball |
| Comparative Ex. 2 | Ditto | Ditto |
| Comparative Ex. 3 | Ditto | Ditto |
| Comparative Ex. 4 | Ditto | Ditto |

As shown in Table 5, the golt balls or Examples 1 - 9 indicated the preferred shot feel and controllability equivalent to the thread-wound golf balls but the golf ball of Comparative Example 1 indicated a rigid shot feel, difficulty in giving spin and poor controllability.

At the time of evaluation of shot feel and controllability in the actual hitting test by professional golfers, the carry was also measured. As for the golf balls of Examples 1 - 9 and Comparative Example 1, the flight distance was at the satisfactory level but as for the golf balls of Comparative Examples 2 - 4, the flight distance was inferior and the evaluation by actual hitting test by professional golfers agreed with the result of evaluation using a swing robot.

Furthermore, in order to investigate the cut resistance of the golf balls of Examples 1 - 9 and Comparative Examples, 1 - 4, pitching wedge was fixed on the swing robot manufactured by Throughtemper Co. and the ball was hit at an angle to cut the ball at the speed of 30 m/sec. and the generation of cutting-injury was investigated. As the result, no cutting injury was produced on the golf balls of Examples 1 - 9 and Comparative Example 1 but on the golf balls of Comparative Examples 2 - 4, small cutting injuries were produced.

Cut resistance was investigated under the same conditions with the thread-wound golf balls covered with the cover made mainly of transpolyisoprene (Barata) but on this ball, a large cutting injury which makes the ball practically unusable was produced.

As described above, the present invention provides a golf ball with preferred shot feel, controllability and indicating the satisfactory level of flying performance and cut resistance.

## Claims

1. A golf ball comprising a core and a cover covering the core, wherein the cover is mainly made of a composition obtainable by mixing an ionomer resin with a diene type rubber in a weight ratio (ionomer resin:diene rubber) of 95:5 to 60:40 at a temperature of from 150° to 270°C, the mixture containing a cross-linking agent which causes the diene type rubber to crosslink.

2. A golf ball as claimed in claim 1 wherein the ionomer resin is a copolymer of 10 to 20 wt% of an α,β-unsaturated carboxylic acid having 3 to 8 carbon atoms and 80 to 90 wt% of an α-olefin, of which a portion of the carboxylic groups is neutralized by a metal ion.

3. A golf ball as claimed in claim 1 or claim 2 wherein the diene type rubber is ethylene propylene diene rubber (EPDM), isoprene rubber, natural rubber, butadiene rubber, styrene butadiene rubber, acrylonitrile butadiene rubber or a mixture thereof.

4. A golf ball as claimed in any one of the preceding claims wherein the crosslinking agent is a dimethylolphenol compound, a phenol formaldehyde resin, m-phenylenebismaleimide, a mixture of m-phenylenebismaleimide and dibenzothiazolsulfide (DM), sulfur, tetraethylthiuramdisulfide, a mixture of tetraethylthiuramdisulfide and zinc stearate (ZnSt), or a mixture thereof.

5. A golf ball as claimed in any one of the preceding claims wherein the cover further comprises additives.

6. A golf ball as claimed in claim 5 wherein the additives are pigments, dispersants, UV ray absorbing agents, optical stabilizers or a mixture thereof.

7. A golf ball as claimed in any one of the preceding claims wherein the cover has a stiffness of from 1,000 to 3,500 kgf/cm².

8. A method for producing a golf ball as claimed in claim 1 comprising covering a core with a cover wherein the cover is prepared by mixing at a temperature of from 150°C to 270°C an ionomer resin and a diene type rubber with a crosslinking agent formulated therein to crosslink the diene type rubber.

9. A method as claimed in claim 8 wherein the ionomer resin is a copolymer of from 10 to 20 wt% of an α,β-unsaturated carboxylic acid having 3 to 8 carbon atoms and 80 to 90 wt% of an α-olefin, of which a portion of the carboxylic groups is neutralized by a metal ion.

10. A method as claimed in claim 8 or claim 9 wherein the diene type rubber is an ethylene propylene diene rubber (EPDM), isoprene rubber, natural rubber, butadiene rubber, styrene butadiene rubber, acrylonitrile butadiene rubber or a mixture thereof.

11. A method as claimed in any one of claims 8 to 10 wherein the crosslinking agent is a dimethylolphenol compound, a phenol formaldehyde resin, m-phenylenebismaleimide, a mixture of m-phenylenebismaleimide and dibenzothiazolsulfide (DM), sulfur, tetraethylthiuramdisulfide (TMTD), a mixture of sulfur and tetraethylthiuramdisulfide, a mixture of tetraethylthiuramdisulfide and zinc stearate (ZnSt), or a mixture thereof.

12. A method as claimed in any one of claims 8 to 11 wherein the cover further comprises additives.

13. A method as claimed in claim 12 wherein the additives are pigments, dispersants, UV ray absorbing agents, optical stabilizers or a mixture thereof.

14. A method as claimed in any one of claims 8 to 13 wherein the cover has a stiffness of from 1,000 to 3,500 kgf/cm².

## Patentansprüche

1. Golfball, umfassend einen Kern und eine Hülle, die den Kern umhüllt, wobei die Hülle hauptsächlich aus einer Zusammensetzung gemacht ist, die durch Mischen eines Ionomerharzes mit einem Gummi des Dientyps in einem Gewichtsverhältnis (Ionomerharz:Diengummi) von 95:5 bis 60:40 bei einer Temperatur von 150 bis 270°C erhältlich ist und das Gemisch ein Vernetzungsmittel enthält, das bewirkt, daß der Gummi vom Dientyp vernetzt.

2. Golfball nach Anspruch 1, wobei das Ionomerharz ein Copolymer aus 10 bis 20 Gew.-% einer α,β-ungesättigten Carbonsäure mit 3 bis 8 Kohlenstoffatomen und 80 bis 90 Gew.-% eines α-Olefins ist, wobei ein Teil der Carbonsäuregruppen durch ein Metallion neutralisiert ist.

3. Golfball nach Anspruch 1 oder 2, wobei der Gummi vom Dientyp Ethylenpropylendiengummi (EPDM), Isoprengummi, natürlicher Gummi, Butadiengummi, Styrolbutadiengummi, Acrylnitrilbutadiengummi oder ein Gemisch davon ist.

4. Golfball nach einem der vorhergehenden Ansprüche, wobei das Vernetzungsmittel eine Dimethylolphenolverbindung, ein Phenolformaldehydharz, m-Phenylenbismaleimid, ein Gemisch aus m-Phenylenbismaleimid und Dibenzolthiazolsulfid (DM), Schwefel, Tetraethylthiuramdisulfid, ein Gemisch aus Tetraethylthiuramdisulfid und Zinkstearat (ZnSt), oder ein Gemisch davon ist.

5. Golfball nach einem der vorhergehenden Ansprüche, wobei die Hülle ferner Zusatzstoffe enthält.

6. Golfball nach Anspruch 5, wobei die Zusatzstoffe Pigmente, Dispergierungsmittel, UV-Strahlenabsorptionsmittel, optische Stabilisatoren oder ein Gemisch davon sind.

7. Golfball nach einem der vorhergehenden Ansprüche, wobei die Hülle eine Steifheit von 1000 bis 3500 kgf/cm² aufweist.

8. Verfahren zur Herstellung eines Golfballs nach Anspruch 1, umfassend das Umhüllen eines Kernes mit einer Hülle, wobei die Hülle hergestellt wird durch Mischen eines Ionomerharzes und eines Gummis vom Dientyp mit einem darin formulierten Vernetzungsmittel bei einer Temperatur von 150°C bis 270°C, wobei der Gummi vom Dientyp vernetzt.

9. Verfahren nach Anspruch 8, wobei das Ionomerharz ein Copolymer aus 10 bis 20 Gew.-% einer α,β-ungesättigten Carbonsäure mit 3 bis 8 Kohlenstoffatomen und 80 bis 90 Gew.-% eines α-Olefins ist, wobei ein Teil der Carbonsäuregruppen durch ein Metallion neutralisiert ist.

10. Verfahren nach Anspruch 8 oder Anspruch 9, wobei der Gummi vom Dientyp ein Ethylenpropylendiengummi (EPDM), Isoprengummi, natürlicher Gummi, Butadiengummi, Styrolbutadiengummi, Acrylnitrilbutadiengummi oder ein Gemisch davon ist.

11. Verfahren nach einem der Ansprüche 8 bis 10, wobei das Vernetzungsmittel eine Dimethylolphenolverbindung, ein Phenolformaldehydharz, m-Phenylenbismaleimid, ein Gemisch aus m-Phenylenbismaleimid und Dibenzothiazolsulfid (DM), Schwefel, Tetraethylthiuramdisulfid (TMTD), ein Gemisch aus Schwefel und Tetraethylthiuramdisulfid, ein Gemisch aus Tetraethylthiuramdisulfid und Zinkstearat (ZnSt) oder ein Gemisch davon ist.

12. Verfahren nach einem der Ansprüche 8 bis 11, wobei die Hülle ferner Zusatzstoffe umfaßt.

13. Verfahren nach Anspruch 12, wobei die Zusatzstoffe, Pigmente, Dispergierungsmittel, UV-Strahlenabsorptionsmittel, optische Stabilisatoren oder Gemische davon sind.

14. Verfahren nach einem der Ansprüche 8 bis 13, wobei die Hülle eine Steifheit von 1000 bis 3500 kgf/cm² aufweist.

## Revendications

1. Balle de golf comprenant un noyau et une couverture placée sur le noyau, dans laquelle la couverture est essentiellement formée d'une composition qui peut être obtenue par mélange d'une résine ionomère avec un caoutchouc du type d'un diène avec un rapport pondéral (résine ionomère/caoutchouc de diène) compris entre 95/5 et 60/40 et une température entre 150 et 270 °C, le mélange contenant un agent de réticulation qui provoque la réticulation du caoutchouc du type d'un diène.

2. Balle de golf selon la revendication 1, dans laquelle la résine ionomère est un copolymère de 10 à 20 % en poids d'un acide carboxylique à insaturation en α,β ayant 3 à 8 atomes de carbone et 80 à 90 % en poids d'une oléfine α, une partie des groupes carboxyliques étant neutralisés par un ion métallique.

3. Balle de golf selon la revendication 1 ou 2, dans laquelle le caoutchouc du type d'un diène est un caoutchouc d'éthylène-propylène-diène (EPDM), un caoutchouc d'isoprène, du caoutchouc naturel, du caoutchouc de butadiène, un caoutchouc de butadiène-styrène, un caoutchouc d'acrylonitrile-butadiène ou un de leurs mélanges.

4. Balle de golf selon l'une quelconque des revendications précédentes, dans laquelle l'agent de réticulation est un composé de diméthylolphénol, une résine de phénolformaldéhyde, du m-phénylène-bis-maléimide, un mélange de m-phénylène-bis-maléimide et de sulfure de dibenzothiazol (DM), du soufre, du bisulfure de tétraéthylthiurame, un mélange de bisulfure de tétraméthylthiurame et de stéarate de zinc (ZnSt), ou un de leurs mélanges.

5. Balle de golf selon l'une quelconque des revendications précédentes, dans laquelle la couverture contient en outre des adjuvants.

6. Balle de golf selon la revendication 5, dans laquelle les adjuvants sont des pigments, des agents dispersants, des agents d'absorption des rayons ultraviolets, des agents stabilisants optiques ou un de leurs mélanges.

7. Balle de golf selon l'une quelconque des revendications précédentes, dans laquelle la couverture a une rigidité comprise entre 1.10⁸ et 3,5.10⁸ Pa (1 000 à 3 500 kgf/cm²).

8. Procédé de production d'une balle de golf selon la revendication 1, comprenant le recouvrement d'un noyau par une couverture telle que la couverture est préparée par mélange, à une température comprise entre 150 et 270 °C, d'une résine ionomère et d'un caoutchouc du type d'un diène avec un agent de réticulation introduit afin qu'il assure la réticulation du caoutchouc du type d'un diène.

9. Procédé selon la revendication 8, dans lequel la résine ionomère est un copolymère de 10 à 20 parties en poids d'un acide carboxylique à insaturation en α,β ayant 3 à 8 atomes de carbone et 80 à 90 % en poids d'une oléfine α, une partie des groupes carboxyliques étant neutralisés par un ion métallique.

10. Procédé selon la revendication 8 ou 9, dans lequel le caoutchouc du type d'un diène est un caoutchouc d'éthylène-propylène-diène (EPDM), un caoutchouc d'isoprène, du caoutchouc naturel, du caoutchouc de butadiène, un caoutchouc de butadiène-styrène, un caoutchouc d'acrylonitrile-butadiène ou un de leurs mélanges.

11. Procédé selon l'une quelconque des revendications 8 à 10, dans lequel l'agent de réticulation est un composé de diméthylolphénol, une résine phénol-formaldéhyde, du m-phénylène-bis-maléimide, un mélange de m-phénylène-bis-maléimide et du sulfure de dibenzothiazol (DM), du soufre, du bisulfure de tétraéthylthiurame (TMTD), un mélange de soufre et de bisulfure de tétraméthylthiurame, un mélange de bisulfure de tétraéthylthiurame et de stéarate de zinc (ZnSt), ou un de leurs mélanges.

12. Procédé selon l'une quelconque des revendications 8 à 11, dans lequel la couverture contient en outre des adjuvants.

13. Procédé selon la revendication 12, dans lequel les adjuvants sont des pigments, des agents dispersants, des agents absorbant les rayons ultraviolets, des agents stabilisants optiques ou un de leurs mélanges.

14. Procédé selon l'une quelconque des revendications 8 à 13, dans lequel la couverture a une rigidité comprise entre 1.10⁸ et 3,5.10⁸ Pa (1 000 à 3 500 kgf/cm²).
